# EUROPÄISCHE PATENTSCHRIFT

(11) **EP 1 184 342 B1**
(45) Veröffentlichungstag und Bekanntmachung des Hinweises auf die Patenterteilung: **11.02.2004**
(21) Anmeldenummer: 01120118.3
(22) Anmeldetag: 22.08.2001
(51) Int. Cl.: C02F 3/14, B01F 3/04, B01F 7/16

(54) **Einrichtung zur Abwasserreinigung**
Device for water treatment
Dispositif pour traiter l' eau

(30) Priorität: 30.08.2000 DE 20014964 U
(43) Veröffentlichungstag der Anmeldung: 06.03.2002
(73) Patentinhaber: Bionik GmbH - Innovative Technik für die Umwelt, 65232 Taunusstein (DE)
(72) Erfinder: Richter, Michael, 65527 Niedernhausen (DE)
(74) Vertreter: Patentanwälte Möll und Bitterich

(56) Entgegenhaltungen:
- EP-A- 0 743 285
- FR-A- 2 736 906
- FR-A- 2 751 845
- US-A- 3 612 489
- US-A- 4 581 181

## Beschreibung

Die Erfindung betrifft eine Einrichtung zur Abwasserreinigung mit mindestens einem Belebungsbecken, in welchem ein diskontinuierlich betriebener Belüftungsrotor angeordnet ist, der von einer mit mindestens einem Schwimmkörper versehenen Tragvorrichtung getragen ist

Die Klärung von Abwasser erfolgt heutzutage in verschiedenen Stufen. Nach einer mechanischen Vorklärung des Abwassers wird es einer biologischen Reinigung unterzogen. Dabei werden organische Substanzen unter aeroben Bedingungen mit Hilfe von Mikroorganismen in Wasser und Kohlenstoff umgesetzt. Es bleiben aber noch beträchtliche Mengen an Stickstoff und Phosphor in dem so gereinigten Wasser, so dass zunehmend Wert darauf gelegt wird, außer kohlenstoffhaltigen Substanzen in einer weitergehenden Reinigungsstufe auch Stickstoffverbindungen aus dem Abwasser zu entfemen. Dieser Vorgang erfolgt zweistufig. In einer ersten aeroben Stufe, die parallel mit dem Abbau organischer Substanzen stattfinden kann, werden durch autotrophe Mikroorganismen, den Nitrifikanten, Ammoniumverbindungen zu Nitrit und schließlich zu Nitrat oxidiert. In einer nachgeschalteten anaeroben Behandlungsstufe wird dann mit Hilfe von Denitrifikanten Nitrat in Stickstoff, Kohlenstoff und Wasser umgewandelt. Infolge Mangels an gelöstem Sauerstoff dient dabei das Nitrat als Sauerstoffquelle für den Umsetzungsprozess. Für die Eliminierung von Stickstoff aus dem Abwasser ist also der Wechsel von aeroben und anaeroben Verhältnissen Voraussetzung. Während beider Behandlungsstufen ist eine gute Durchmischung des Abwassers erforderlich.

In diesem Zusammenhang ist das sogenannte SBR("Sequencing-Batch-Reactor")-Verfahren bekannt. Dieses Verfahren zeichnet sich dadurch aus, dass die einzelnen Verfahrensschritte, also die Stufen der biologischen Reinigung sowie die Nachklärung nacheinander im selben Behälter ablaufen, also nicht räumlich voneinander getrennt sind. Dieses Verfahren eignet sich grundsätzlich für den Betrieb kleinerer Einheiten.

Dabei ist es weiterhin bekannt, in sogenannten Belebungsbecken einen motorisch angetriebenen Belüftungsrotor mit vertikaler Drehachse anzuordnen, der durch eine mit Schwimmkörpern versehene Tragvorrichtung in der Höhe des Flüssigkeitsspiegels gehalten wird und der durch die Anordnung von Rotorschaufeln an einem Schaufelrad sowohl für eine Durchmischung des Abwassers als auch für den erforderlichen Sauerstoffeintrag sorgt.

Dieser Belüftungsrotor wird üblicherweise zentral im Belebungsbecken angeordnet (DE-A 17 59 548, EP-A 0 743 285, US-A 4 581 181). Das bedeutet, dass die Tragvorrichtung mit den Schwimmkörpern ebenfalls im zentralen Teil des Beckens angeordnet und dort gegen Lageänderungen, insbesondere gegen Drehbewegungen fixiert werden muss; dies geschieht oft durch Abspannungen, auch gegenüber den Beckenwänden. Dadurch wird nicht nur die Umwälzung des Abwassers gestört, sondern vor allem die Zugänglichkeit für Wartungs- und Reparaturarbeiten am Belüftungsrotor erschwert.

Vor diesem Hintergrund liegt der Erfindung die Aufgabe zugrunde, eine Möglichkeit zu schaffen, um diese Nachteile zu vermeiden, d.h. die Zugänglichkeit des Belüftungsrotors zu verbessern, ohne die Effektivität seiner Wirksamkeit zu beeinträchtigen.

Erfindungsgemäß wird diese Aufgabe durch eine Einrichtung zur Abwasserreinigung mit den Merkmalen des Patentanspruchs 1 gelöst.

Vorteilhafte Weiterbildungen ergeben sich aus den Unteransprüchen.

Der Grundgedanke der Erfindung besteht in der Abkehr von dem Prinzip der zentralen Anordnung des Belüftungsrotors im Belebungsbecken durch Anordnung der diesen haltenden Tragvorrichtung in unmittelbarer Nähe einer Beckenwand.

Die Höhenverstellbarkeit der Tragvorrichtung entsprechend den unterschiedlichen Höhen des Flüssigkeitsspiegels lässt sich hier auf einfache Weise dadurch bewerkstelligen, dass die Tragvorrichtung an einer vertikalen, an der Beckenwand angebrachten Führung längsbeweglich ist.

Die Anordnung einer Mischvorrichtung unmittelbar an einer Beckenwand ist zwar bei einer Jauchegrube bekannt, bei der ein Mischflügel mit horizontaler Welle mittels einer Winde entlang einer vertikalen Führung in unterschiedliche Höhenpositionen gebracht und in diesen durch Klemmelemente fixiert werden kann (FR-A 2 736 906).

Erfindungsgemäß ist durch Ausbildung einer Plattform an der winkelförmig gestalteten Tragvorrichtung und die Gestaltung der Führung an der Beckenwand als Leiter der Belüftungsrotor unabhängig vom Füllungsgrad des Beckens vom Beckenrand aus jederzeit ungehindert zugänglich, so dass Wartungs- und Reparaturarbeiten auf einfache Weise vorgenommen werden können.

Strömungsversuche mit der erfindungsgemäßen Einrichtung haben ergeben, dass die sauerstoffgesättigte Grenzfläche des Abwassers an den dem Belüftungsrotor gegenüberliegenden Beckenwänden nach unten geführt wird und dort zu einer guten Durchmischung des Abwassers führt, während an der dem Belüftungsrotor zugeordneten Beckenwand noch mit Luftbläschen angereichertes Abwasser in die Tiefe gelangt und zu einem guten Sauerstoffeintrag führt.

Für den Winterbetrieb eines derartigen Belebungsbeckens ergibt sich eine sehr vorteilhafte Möglichkeit einer Eisbildung am Belüftungsrotor dadurch vorzubeugen, dass dieser von einem Gehäuse umschlossen wird, in dem durch den Ansaugeffekt des Rotors ein am Antriebsmotor entlangstreichender Luftstrom erzeugt wird, der dessen Abwärme aufnimmt und sie an das durch den Rotor aufgewirbelte Abwasser weitergibt

Die Erfindung wird nachstehend anhand eines in der Zeichnung dargestellten Ausführungsbeispiels näher erläutert. Es zeigt
- Fig. 1: die Draufsicht auf ein in erfindungsgemäßer Weise ausgebildetes Belebungsbecken,
- Fig. 2: einen Vertikalschnitt durch die Beckenwand entlang der Linie II-II in Fig. 1 in etwas vergrößertem Maßstab,
- Fig. 3: eine Draufsicht auf die Tragvorrichtung mit dem Rotor in größerem Maßstab und
- Fig. 4: in Ansicht und teilweisem Schnitt eine vorteilhafte Ausführungsform des Belüftungsrotors mit Antriebsmotor.

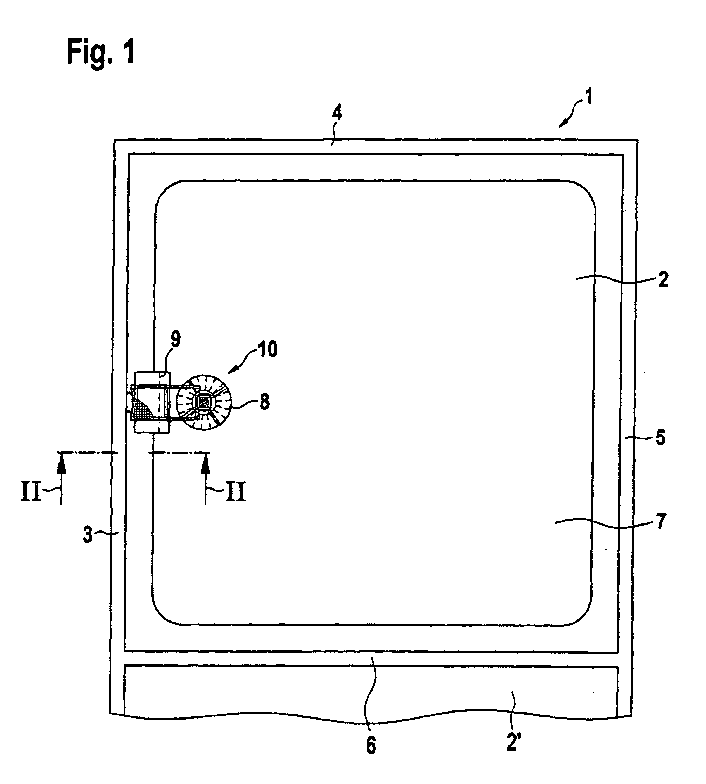

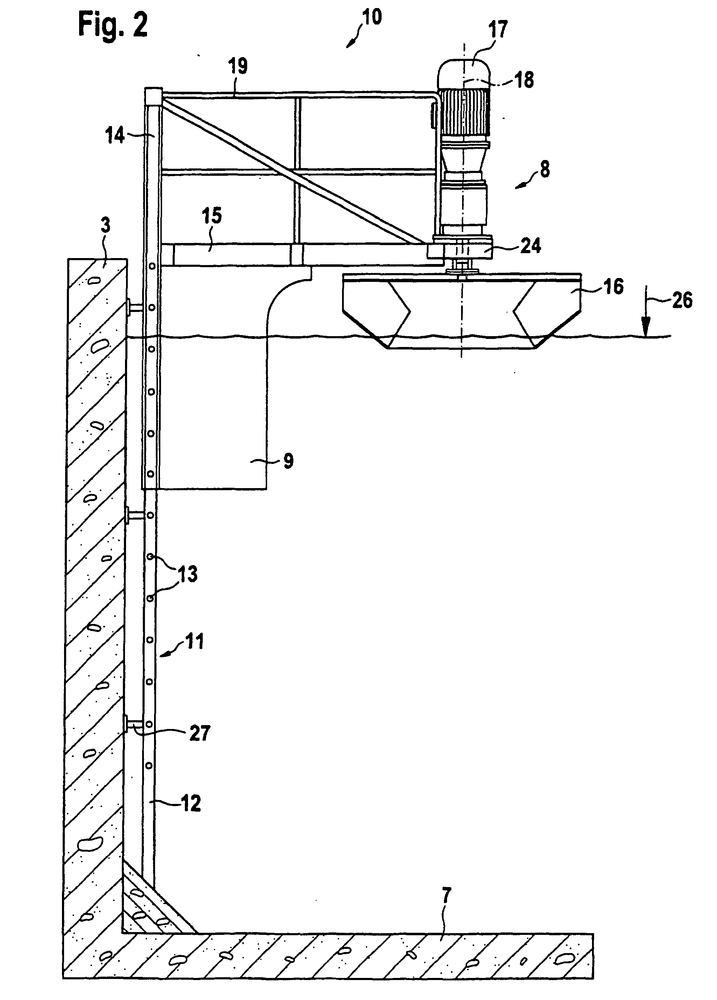

Fig. 1 zeigt in Draufsicht ein Belebungsbecken 1 mit einer Kammer 2, der grundsätzlich auch weitere in entsprechender Weise ausgebildete Kammern 2' folgen können. Die Kammer 2 wird durch Beckenwände 3, 4, 5 und 6 und eine Beckensohle 7 begrenzt. Im Bereich der in der Darstellung linken Beckenwand 3 befindet sich der Belüftungsrotor 8, der zusammen mit einem Schwimmkörper 9 von einer Tragvorrichtung 10 getragen wird. Diese Situation ist in Fig. 2, einem Schnitt entlang der Linie II-II in Fig. 1, deutlicher erkennbar.

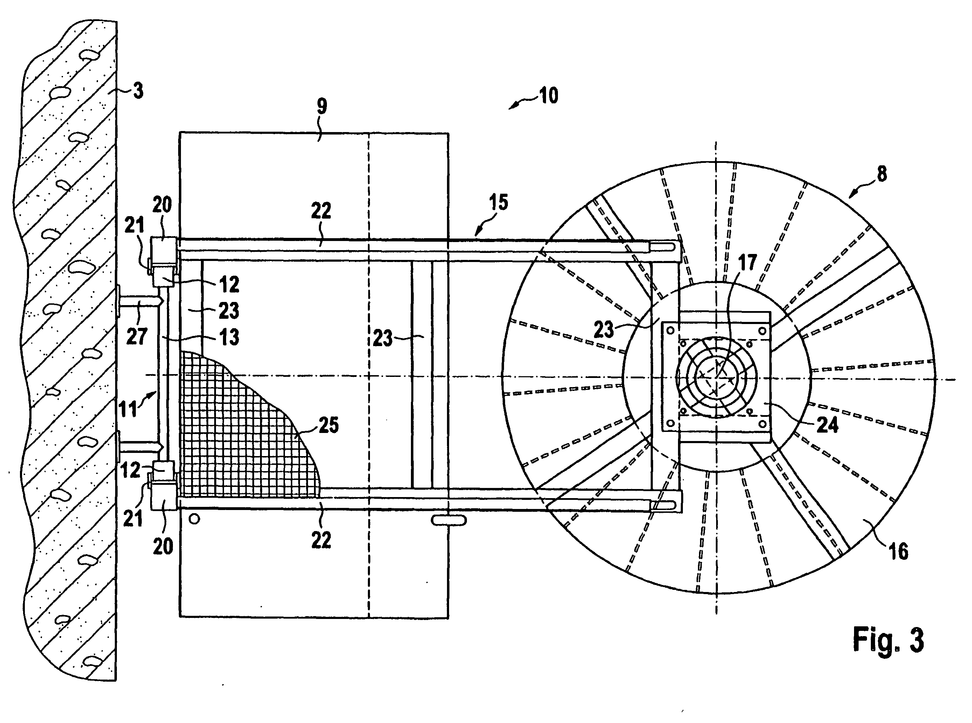

Wie Fig. 2, aber auch Fig. 3 zeigen, ist entlang der Beckenwand 3 in geringem Abstand von der Wandoberfläche durch Konsolen 27 eine leiterartige Führung 11 angebracht. Diese Führung 11 besteht aus zwei seitlichen vertikalen Holmen 12, die durch Leitersprossen 13 miteinander verbunden sind.

Die Tragvorrichtung 10 selbst besteht aus einem vertikalen Führungsteil 14, das entlang der Führung 11 höhenverschieblich ist, sowie einem horizontalen Kragteil 15, das von dem Führungsteil 14 aus zum Beckeninneren hin auskragt und an dessen freiem Ende der Belüftungsrotor 8 gelagert ist. Der Schwimmkörper 9 befindet sich in der Ecke zwischen dem vertikalen Führungsteil 14 und dem horizontalen Kragteil 15. Der Belüftungsrotor 8 umfasst ein in die Flüssigkeit eintauchendes Schaufelrad 16 und einen Antriebsmotor 17, meist einen Elektromotor, mit vertikaler Drehachse 18. Die Tragvorrichtung 10 wird komplettiert durch seitliche Geländerteile 19.

Wie insbesondere Fig. 3 erkennen lässt, die eine Draufsicht auf die Tragvorrichtung 10 mit dem Belüftungsrotor 8 zeigt, umfasst das vertikale Führungsteil 14 zwei Längsträger 20, die an ihren gegeneinander gerichteten Innenseiten U-förmige Aufnahmen 21 aufweisen, welche die Holme 12 der leiterartigen Führung 11 von außen umgreifen. Dadurch ist die Tragvorrichtung 10 in vertikaler Richtung beweglich und zugleich gegen Kippen gesichert an der Führung 11 geführt.

Das Kragteil 15 der Tragvorrichtung 10 umfasst zwei seitliche Kragträger 22, die von den Längsträgem 20 auskragen und durch Querträger 23 miteinander verbunden sind. An dem äußersten Querträger 23 am freien Ende des Kragteils 15 ist eine Konsolplatte 24 befestigt, die das Rotoraggregat 8, bestehend aus Schaufelrad 16 und Motor 17, trägt. Durch einen aufgelegten Gitterrost 25 wird das Kragteil zu einer Plattform vervollständigt.

Wie Fig. 2 erkennen lässt, kann die gesamte Tragvorrichtung 10 durch teilweises Füllen des Schwimmkörpers 9 mit Ballastflüssigkeit so austariert werden, dass das Schaufelrad über eine bestimmte Tiefe in die Flüssigkeit eintaucht, deren Spiegel bei 26 angedeutet ist. Die Tragvorrichtung 10 kann auf diese Weise unterschiedlichen Höhen des Flüssigkeitsspiegels 26 folgen, wobei die Plattform und damit der Belüftungsrotor 8 in jeder Höhe auf einfache Weise über die leiterartige Führung 11 erreicht werden kann.

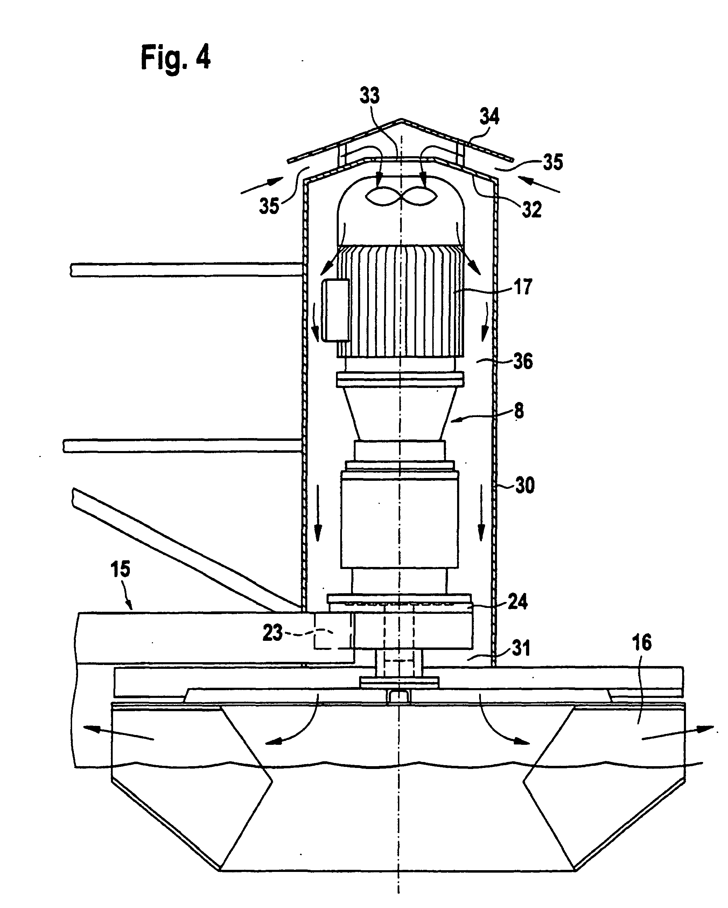

In Fig. 4 ist eine besondere Ausführungsform des aus Schaufelrad 16 und Antriebsmotor 17 bestehenden Belüftungsaggregates 8 dargestellt. Der am freien Ende des Kragteils 15 angeordnete Antriebsmotor 17 ist hier von einem zylindrischen Gehäuse 30 umgeben, das am unteren Ende zum Schaufelrad 16 hin geöffnet ist und das am oberen Ende eine durch einen kegelstumpfförmigen Ring 32 gebildete Belüftungsöffnung 33 aufweist, durch die Außenluft in den Ringraum zwischen dem Motorgehäuse und dem Gehäuse 30 gelangen kann. Als Schutz gegen Niederschlagswasser ist ein dachförmiger Lüftungsaufsatz 34 vorgesehen, so dass zwischen diesem und dem Ring 32 Lufteintrittsöffnungen 35 gebildet sind.

Durch die im Betrieb durch das Schaufelrad 16 ausgeübte Gebläsewirkung wird, wie durch Pfeile angedeutet, durch die Lufteintrittsöffnungen 35 Außenluft angesaugt, die durch die Belüftungsöffnung 33 in den Ringraum 36 gelangt, beim Entlangstreichen am Gehäuse des Antriebsmotors 17 von diesem Abwärme aufnimmt und diese am unteren offenen Ende 31 des Gehäuses 30 gegen die Rotorschaufeln 16 gerichtet austreten lässt. Diese Luftbewegung wird im wesentlichen durch den vom sich drehenden Schaufelrad 16 ausgeübten Sog aufrecht erhalten.

Auf diese Weise kann die Abwärme des Antriebsmotors 17 benutzt werden, um nicht nur das Schaufelrad 16 bei Frost eisfrei zu halten, sondern auch der durch das Schaufelrad 16 bewegten Flüssigkeit etwas Wärme zuzuführen, welche die mikrobiologischen Prozesse in der kalten Jahreszeit fördert.

## Patentansprüche

1. Einrichtung zur Abwasserreinigung mit mindestens einem Belebungsbecken, in welchem ein diskontinuierlich betriebener Belüftungsrotor angeordnet ist, der von einer mit mindestens einem Schwimmkörper versehenen Tragvorrichtung (10) getragen ist, die an einer vertikalen Führung (11) in Abhängigkeit vom Flüssigkeitsspiegel (26) im Becken höhenveränderlich gehalten ist, **dadurch gekennzeichnet,**
**dass** die vertikale Führung (11) für die Tragvorrichtung (10) in unmittelbarer Nähe einer Beckenwand (3) angeordnet und an dieser fixiert ist und dass die Tragvorrichtung (10) winkelförmig aus einem vertikalen Führungsteil (14) und einem horizontalen Kragteil (15) ausgebildet ist, das eine Plattform aufweist und an dem der Belüftungsrotor (8) gehalten ist.

2. Einrichtung nach Anspruch 1, **dadurch gekennzeichnet, dass** das vertikale Führungsteil (14) der Tragvorrichtung (10) zwei Längsträger (20) umfasst, die an den Holmen (12) der leiterartig ausgebildeten Führung (11) längsbeweglich gehalten sind.

3. Einrichtung nach Anspruch 2, **dadurch gekennzeichnet, dass** die leiterartige Führung (11) im Abstand von der Behälterwand (3) mittels Konsolen (27) an dieser befestigt ist.

4. Einrichtung nach Anspruch 2 oder 3, **dadurch gekennzeichnet, dass** zwei Holme (12) der leiterartigen Führung (11) durch Sprossen (13) zu einer Leiter verbunden sind.

5. Einrichtung nach einem der Ansprüche 2 bis 4, **dadurch gekennzeichnet, dass** an den Längsträgem (20) des Führungsteils (14) U-förmige Aufnahmen (21) gebildet sind, welche die Holme (12) der Führung (11) umfassen.

6. Einrichtung nach einem der Ansprüche 1 bis 5, **dadurch gekennzeichnet, dass** die Plattform an dem horizontalen Kragteil (15) aus zwei seitlichen, durch Querträger (23) verbundenen Kragträgem (22) besteht.

7. Einrichtung nach Anspruch 6, **dadurch gekennzeichnet, dass** die Plattform durch einen Gitterrost (25) abgedeckt ist.

8. Einrichtung nach einem der Ansprüche 1 bis 7, **dadurch gekennzeichnet, dass** der Schwimmkörper (9) in dem Eckbereich zwischen dem vertikalen Führungsteil (14) und dem horizontalen Kragteil (15) der Tragvorrichtung (10) angeordnet ist.

## Claims

1. An apparatus for waste-water purification with at least one aeration tank in which there is disposed a discontinuously operated aerating rotor which is carried by a supporting device (10) which is provided with at least one float and which is retained on a vertical guide (11) so as to be variable in height depending on the liquid level (26) in the tank, **characterised in that** the vertical guide (11) for the supporting device (10) is disposed in the immediate vicinity of a tank wall (3) and is secured thereto, and **in that** the supporting device (10) is formed angularly from a vertical guide member (14) and a horizontal cantilever member (15) which has a platform on which the aerating rotor (8) is retained.

2. An apparatus according to Claim 1, **characterised in that** the vertical guide member (14) of the supporting device (10) comprises two longitudinal members (20) which are retained longitudinally movably on beams (12) of the guide (11) of ladder-like design.

3. An apparatus according to Claim 2, **characterised in that** the ladder-like guide (11) is fastened to the container wall (3) by means of brackets (27) and at a distance therefrom.

4. An apparatus according to Claim 2 or 3, **characterised in that** two beams (12) of the ladder-like guide (11) are connected by rungs (13) to form a ladder.

5. An apparatus according to any one of Claims 2 to 4, **characterised in that** U-shaped sockets (21) are formed on the longitudinal members (20) of the guide member (14), which sockets enclose the beams (12) of the guide (11).

6. An apparatus according to any one of Claims 1 to 5, **characterised in that** the platform on the horizontal cantilever member (15) comprises two lateral cantilever beams (22) connected by cross members (23).

7. An apparatus according to Claim 6, **characterised in that** the platform is covered by a lattice grate (25).

8. An apparatus according to any one of Claims 1 to 7, **characterised in that** the float (9) is disposed in the corner region between the vertical guide member (14) and the horizontal cantilever member (15) of the supporting device (10).

## Revendications

1. Dispositif pour traiter l'eau usée comprenant au moins un bassin d'activation dans lequel se trouve un rotor d'aération fonctionnant de manière discontinue qui est supporté par un système porteur (10) équipé d'au moins un corps flottant, système maintenu dans le bassin à une hauteur variable, selon le niveau d'eau (26), sur un guide vertical (11), **caractérisé en ce que** le guide vertical (11) pour le système porteur (10) est placé à proximité immédiate d'une paroi du bassin (3) et est fixé à cette dernière, et **en ce que** ce système porteur (10) présente une forme d'équerre, avec une pièce de guidage verticale (14) et une pièce horizontale en porte-à-faux (15) qui comporte une plateforme et sur laquelle est fixé le rotor d'aération (8).

2. Dispositif selon la revendication 1, **caractérisé en ce que** la pièce de guidage verticale (14) du système porteur (10) comprend deux supports longitudinaux (20) maintenus de manière à permettre le déplacement longitudinal sur les montants (12) du guide vertical (11) dont la structure est similaire à celle d'une échelle.

3. Dispositif selon la revendication 2, **caractérisé en ce que** le guide (11) en forme d'échelle est fixé à distance de la paroi du bassin (3) au moyen de consoles (27).

4. Dispositif selon la revendication 2 ou 3, **caractérisé en ce que** les deux montants (12) du guide (11) en forme d'échelle sont reliés par des échelons (13) pour en faire une échelle.

5. Dispositif selon l'une des revendications 2 à 4, **caractérisé en ce que** les supports longitudinaux (20) de la pièce de guidage (14) présentent des logements (21) en forme de U qui entourent les montants (12) du guide (11).

6. Dispositif selon l'une des revendications 1 à 5, **caractérisé en ce que** la plateforme sur la pièce horizontale en porte-à-faux (15) est constituée de deux poutres en porte à faux (22) reliées par des poutres transversales (23).

7. Dispositif selon la revendication 6, **caractérisé en ce que** la plateforme est recouverte d'un caillebotis métallique (25).

8. Dispositif selon l'une des revendications 1 à 7, **caractérisé en ce que** le corps flottant (9) est placé dans la zone d'angle formée entre la pièce de guidage verticale (14) et la pièce horizontale en porte-à-faux (15) du système porteur (10).
